(19) Europäisches Patentamt / European Patent Office / Office européen des brevets

(11) **EP 4 446 353 A1**

(12) **EUROPÄISCHE PATENTANMELDUNG**

(43) Veröffentlichungstag:
**16.10.2024   Patentblatt 2024/42**

(21) Anmeldenummer: 23168075.2

(22) Anmeldetag: **14.04.2023**

(51) Internationale Patentklassifikation (IPC):
**C08G 18/18** (2006.01)    **C08G 18/40** (2006.01)
**C08G 18/42** (2006.01)    **C08G 18/48** (2006.01)
**C08G 18/50** (2006.01)    **C08G 18/76** (2006.01)
**C08J 9/14** (2006.01)

(52) Gemeinsame Patentklassifikation (CPC):
**C08G 18/4891; C08G 18/1808; C08G 18/1816;
C08G 18/1825; C08G 18/4018; C08G 18/4261;
C08G 18/4816; C08G 18/4825; C08G 18/4829;
C08G 18/5033; C08G 18/7664; C08J 9/144;
C08J 9/148;** C08G 2110/0025; C08G 2110/005

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
• **Frick-Delaittre, Elena**
  **50679 Köln (DE)**
• **Lorenz, Klaus**
  **41539 Dormagen (DE)**

• **van Elst, Joshua**
  **51469 Bergisch Gladbach (DE)**
• **Schuck, Nikola Julia**
  **51467 Bergisch Gladbach (DE)**
• **Boerger, Thomas**
  **51377 Leverkusen (DE)**
• **Hupka, Florian**
  **40589 Düsseldorf (DE)**
• **Albers, Reinhard**
  **51375 Leverkusen (DE)**

(74) Vertreter: **Levpat**
**c/o Covestro AG**
**Gebäude K12**
**51365 Leverkusen (DE)**

(54) **POLYURETHANSCHAUMSTOFF MIT VERBESSERTER DIMENSIONSSTABILITÄT**

(57)    Die vorliegende Erfindung betrifft eine gegenüber Isocyanaten reaktive Zusammensetzung, ein Verfahren zur Herstellung von Polyurethan (PUR)-Hartschaumstoffen aus der gegenüber Isocyanaten reaktiven Zusammensetzung und einem Isocyanat und die Verwendung der Polyurethanhartschaumstoffe zur thermischen Isolierung.

**EP 4 446 353 A1**

**Beschreibung**

Die vorliegende Erfindung betrifft eine gegenüber Isocyanaten reaktive Zusammensetzung, ein Verfahren zur Herstellung von Polyurethan (PUR)-Hartschaumstoffen aus der gegenüber Isocyanaten reaktiven Zusammensetzung und einem Isocyanat und die Verwendung der Polyurethanhartschaumstoffe zur thermischen Isolierung.

Von der Bezeichnung PUR-Hartschaumstoffe bzw. PUR-Schaumstoffe sind im Folgenden auch solche Polyurethanhartschaumstoffe bzw. Polyurethanschaumstoffe umfasst, welche zumindest teilweise Polyisocyanuratgruppen aufweisen.

Die Herstellung von PUR-Hartschaumstoffen erfolgt üblicherweise durch Umsetzung von Polyisocyanaten mit Verbindungen mit mindestens zwei gegenüber Isocyanaten reaktiven Wasserstoffatomen, zumeist einer Polyolkomponente, in Anwesenheit von Katalysatoren, Treibmitteln sowie Hilfs- und/oder Zusatzstoffen.

Der Einsatz von Polyurethanhartschaumstoffen als thermisches Isolierungsmaterial, insbesondere in Kühl- oder Gefriergeräten ist an sich bekannt. Je nach spezifischen Anforderungsprofilen können spezifische gegenüber Isocyanaten reaktive Zusammensetzungen oder spezifische Isocyanate eingesetzt werden.

In der Vergangenheit zur Herstellung solcher Schaumstoffe eingesetzte umweltschädliche Treibmittel wie Fluorchloralkane wurden sukzessive durch umweltfreundlichere Alternativen wie Haloolefine oder Kohlenwasserstoffe ersetzt, wobei haloolefingetriebene Schaumstoffe generell gegenüber kohlenwasserstoffgetriebenen Schaumstoffen verringerte Wärmeleitfähigkeiten, das heißt im Kontext ihres Einsatz zur thermischen Isolierung verbesserter Wärmeleitfähigkeiten, aufweisen.

Im Bereich der Polyole wurde nach Alternativen auf Basis nachwachsender Rohstoffe gesucht. Auf Pflanzenölen basierende Polyole sind dem Fachmann grundsätzlich bekannt. Ihm ist auch bekannt, dass ein Einsatz größerer Mengen solcher Polyole in der Regel eine Erhöhung, das heißt im Kontext ihres Einsatz zur thermischen Isolierung: eine Verschlechterung, der Wärmeleitfähigkeit der Schaumstoffe nach sich zieht.

WO 2022/132075 A1 offenbart generell ein Reaktionssystem zur Herstellung von Polyurethanschaumstoff umfassend eine Mischung von pflanzenbasierten und erdölbasierten Polyetherpolyolen, Isocyanat, wenigstens einen Trimerisierungskatalysator, wenigstens einen Amintreibkatalysator, wenigstens einen Gelkatalysator und wenigstens eine silikonbasierte oberflächenaktive Komponente. Hierbei wird offenbart, dass das Reaktionssystem, jeweils bezogen auf 100 Teile Polyole, neben wenigstens 32 Teilen Treibmittel, bei dem es sich um Trans-1-chlor-3,3,3-trifluorpropen und/oder cis-1,1,1-4,4,4-Hexafluor-2-buten handelt, höchstens 49 Teile pflanzenbasierter Biopolyole enthalten darf.

Bei der Untersuchung solcher Schaumstoffe wurde festgestellt, dass sie im Hinblick auf ihre mechanischen Eigenschaften, insbesondere Schwindung, d.h. die Volumenänderung des frei geschäumten Schaumstoffes, und Nachtrieb, d.h. die Volumenänderung des verdichteten Schaumstoffes, eine Verschlechterung aufweisen, das heißt ihr Volumen nach Beendigung des freien Schäumvorgangs abnahm (Schwindung) bzw. nach Entformen des verdichtet hergestellten Schaumstoffs zunahm (Nachtrieb).

Bei einem verdichteten Schaumstoff handelt es sich im Rahmen dieser Anmeldung um einen Schaumstoff, dessen Ausgangsmaterialien in einer definierten Menge in einer geschlossenen Form schäumen gelassen wurden. Das Volumen der geschlossenen Form ist hierbei geringer als das, das ein frei geschäumter Schaumstoff aus der gleichen definierten Menge der gleichen Ausgangsmaterialien einnimmt.

Es stellte sich also die Aufgabe, einen Schaumstoff bereitzustellen, der gegenüber den aus dem Stand der Technik bekannten Schaumstoffen auf Basis umweltfreundlicher, z.B. auf Basis nachwachsender Rohstoffe erhältlicher, Ausgangsmaterialien verbesserte mechanische Eigenschaften, insbesondere verbesserte Schwindung und/oder Nachtrieb, idealerweise bei vergleichbar guter, d.h. geringer, Wärmeleitfähigkeit aufweist.

Überraschenderweise gelöst wurde diese Aufgabe durch eine gegenüber Isocyanaten reaktive Zusammensetzung umfassend

 i. eine Polyolzusammensetzung umfassend

  A. wenigstens ein Polyol, umfassend
  A1. wenigstens ein hydrophobes Polyol, insbesondere ein fettchemisches Polyol, A1,
  B. wenigstens einen Katalysator
  C. gegebenenfalls wenigstens einen Stabilisator
  D. gegebenenfalls weitere Hilfs- und/oder Zusatzstoffe

 ii. 1,0 - 30,0 Gew.-%, bezogen auf die Gesamtmenge der Polyolzusammensetzung, eines physikalischen Treibmittels umfassend wenigstens 1,0 Gew.-%, bezogen auf die Gesamtmenge der Polyolzusammensetzung, eines halogenierten Olefins.

Ein weiterer Gegenstand der Erfindung ist ein Verfahren zur Herstellung eines Polyurethanhartschaumstoffs aus der erfindungsgemäßen und im Detail beschriebenen gegenüber Isocyanaten reaktiven Zusammensetzung und einem Polyisocyanat.

Gegenstand der Erfindung ist auch ein Polyurethanhartschaumstoff, erhältlich oder erhalten aus der Umsetzung der erfindungsgemäßen gegenüber Isocyanaten reaktiven Zusammensetzung mit einem Polyisocyanat.

Weiterhin betrifft die Erfindung die Verwendung eines solchen Polyurethanhartschaumstoffs zur thermischen Isolierung, insbesondere in Kühl- oder Gefriergeräten.

Schließlich ist ein solches Kühl- oder Gefriergerät umfassend den erfindungsgemäßen Polyurethanhartschaumstoff Gegenstand der Erfindung.

Die Erfindung betrifft also eine gegenüber Isocyanaten reaktive Zusammensetzung, die eine Polyolzusammensetzung umfasst. Diese Polyolzusammensetzung wiederum umfasst wenigstens ein Polyol und wenigstens einen Katalysator, außerdem optional wenigstens einen Stabilisator und weitere Hilfs- und/oder Zusatzstoffe. Das Polyol umfasst wenigstens ein hydrophobes Polyol A1. Außer der Polyolzusammensetzung enthält die gegenüber Isocyanaten reaktive Zusammensetzung ein physikalisches Treibmittel in einer Menge von 1,0 - 30,0 Gew.-%, bezogen auf die Gesamtmenge an Polyolzusammensetzung. Das physikalische Treibmittel enthält ein halogeniertes Olefin in einer Menge von wenigstens 1,0 Gew.-%, wiederum bezogen auf die Gesamtmenge an Polyolzusammensetzung.

Als hydrophobe Polyole eignen sich insbesondere fettchemische Polyole, welche durch ihre langen Kohlenwasserstoffketten hydrophob wirken. Es ist hierbei ebenfalls möglich, dass die Polyole eine Blockstruktur mit unterschiedlich hydrophob und hydrophil wirkenden Gruppen besitzen, und sich insgesamt ein hydrophober Charakter des Polyols ergibt. Fettchemische Polyole sind aus tierischen oder pflanzlichen Fetten und Ölen erhältlich. Insbesondere sind hierunter Polyole zu verstehen, die neben Hydroxygruppen auch chemisch eingebundene Fettsäurereste enthalten. Die Hydroxygruppen können beispielsweise Endgruppen von Polyether-, Polyetherester oder Polyesterstrukturen sein, sie können aber auch direkt an die Fettsäurereste gebunden sein, sei es durch Einsatz von beispielsweise Ricinolsäure(derivaten) oder von über chemischem Weg an der Fettsäurekette mit Hydroxygruppen modifizierten Fettsäure(derivate)n.

Bevorzugt werden erfindungsgemäß als hydrophobe Polyole Polyetheresterpolyole eingesetzt. Unter Polyetheresterpolyolen werden erfindungsgemäß solche Polyole verstanden, deren chemischer Aufbau sowohl Ether- als auch Estergruppen aufweist. Das Polyetheresterpolyol kann neben den vorstehend genannten Strukturelementen prinzipiell sämtliche dem Fachmann bekannten Baueinheiten dieser Substanzklasse aufweisen. Besonders bevorzugt werden Polyetheresterpolyole eingesetzt, welche sich auf Basis von nachwachsenden Rohstoffen, insbesondere fettchemischen Ausgangsstoffen, erhalten lassen. Ganz besonders bevorzugt werden Polyetheresterpolyole auf Basis von Fettsäureestern eingesetzt. Der Oberbegriff "Fettsäureester" bezeichnet im Folgenden Fettsäureglyceride, insbesondere Fettsäuretriglyceride, und/oder Fettsäureester auf Basis anderer mono- und mehrfunktioneller Alkohole. Die Fettsäurereste (Acyl-Reste) der Fettsäureester können, wie beim Ricinusöl, ihrerseits Hydroxygruppen tragen. Ebenso können die Fettsäurereste nachträglich mit Hydroxygruppen modifiziert worden sein. Derart modifizierte Fettsäurereste können beispielsweise durch Epoxidierung der olefinischen Doppelbindungen und anschließende Ringöffnung der Oxiranringe mit Nucleophilen oder durch Hydroformylierung / Hydrierung erhalten werden. Auch werden ungesättigte Öle zu diesem Zweck häufig bei erhöhter Temperatur mit Luftsauerstoff behandelt.

Als hydrophobe Polyole werden bevorzugt Polyetheresterpolyole mit einer OH-Zahl von > 28 bis ≤ 900 mg KOH/g, besonders bevorzugt von ≥ 56 bis ≤ 600 mg KOH/g, mehr bevorzugt von ≥ 100 bis ≤ 500 mg KOH/g, noch mehr bevorzugt von ≥ 280 bis ≤ 500 mg KOH/g, ganz besonders bevorzugt von ≥ 330 bis ≤ 450 mg KOH/g, am meisten bevorzugt von ≥ 350 bis ≤ 430 mg KOH/g eingesetzt.

Die OH-Zahl (auch: Hydroxylzahl) gibt im Sinne dieser Anmeldung im Falle eines einzelnen zugesetzten Polyols dessen OH-Zahl an. Angaben der OH-Zahl für Mischungen beziehen sich auf die gewichtsmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2, Stand November 2007.

Bevorzugte Polyetheresterpolyole weisen Funktionalitäten von ≥ 1,5 bis ≤ 8,0, besonders bevorzugt von ≥ 2,5 bis ≤ 7,0, mehr bevorzugt von ≥ 4,0 bis ≤ 7,0, noch mehr bevorzugt von ≥ 4,7 bis ≤ 6,7, am meisten bevorzugt von ≥ 5,3 bis ≤ 6,1 auf.

Mit "Funktionalität" oder "f" einer Verbindung ist im Sinne dieser Anmeldung die theoretische Funktionalität gemeint: So beträgt die Funktionalität eines ausschließlich Glycerin-gestarteten Polyols f = 3, die eines ausschließlich Ethylendiamin-gestarteten Polyols f = 4, da Glycerin bzw. Ethylendiamin über 3 bzw. 4 Zerewitinoff-aktive Wasserstoffe verfügen. Mit "Funktionalität" oder "f" einer Komponentenmischung ist im Sinne dieser Anmeldung jeweils die zahlengemittelte Funktionalität der Mischung gemeint, auf die sich die Angabe bezieht.

Erfindungsgemäß einsetzbare Polyetheresterpolyole sind beispielsweise erhältlich durch Umsetzung von Polyetherpolyolen unter Umesterungsbedingungen mit Fettsäureestern, wie beispielsweise beschrieben in DE 19604177, bzw. DE 19812174 oder durch direkte Veresterung von Fettsäuren mit Polyetherpolyolen. Es ist ebenfalls möglich die erfindungsgemäß einsetzbaren Polyetheresterpolyole durch Umsetzung von Ricinusöl mit Alkylenoxiden nach der Lehre der DE 3323880, WO 2004020497 A1 oder der JP 05163342 zu erhalten. Auch können chemisch mit Hydroxygruppen modifizierte Fettsäureester, wie beispielsweise beschrieben in EP 1790678 A1, nachträglich mit Alkylenoxiden umgesetzt werden. Nach der Lehre von WO 2004096882 und WO 2004096883 ist es außerdem möglich hydroxymethylierte Fettsäureeester mit mehrfunktionellen Polyolen umzuestern.

In einer bevorzugten Ausführungsform der Erfindung werden Polyetheresterpolyole eingesetzt, die durch basenkatalysierte Umsetzung von Starterverbindungen mit Zerewitinoff-aktiven Wasserstoffatomen mit Alkylenoxiden in Gegenwart von Fettsäureestern erhältlich sind. Hierbei handelt es sich insbesondere um die an sich bekannten Polyetheresterpolyole, wie sie beispielsweise gemäß den Lehren der EP 1923417 A1, der EP 2177555 A1 und der von der Anmelderin der vorliegenden Erfindung hinterlegten internationalen Patentanmeldung mit der Anmeldenummer WO 2023/057328 A1 in basenkatalysierten Eintopf-Einschrittverfahren erhalten werden können.

Unter Starterverbindungen im Sinne der Erfindung werden Verbindungen verstanden, die mindestens ein Zerewitinoff-aktives Wasserstoffatom aufweisen. An N, O oder S gebundener Wasserstoff wird als Zerewitinoff-aktiver Wasserstoff (oder als "aktiver Wasserstoff') bezeichnet, wenn er nach einem von Zerewitinoff aufgefundenen Verfahren durch Umsetzung mit Methylmagnesiumiodid Methan liefert. Typische Beispiele für Verbindungen mit Zerewitinoffaktivem Wasserstoff sind Verbindungen, die Carboxyl-, Hydroxyl-, Amino-, Imino- oder Thiol-Gruppen als funktionelle Gruppen enthalten.

Bevorzugte Starterverbindungen mit Zerewitinoff-aktiven H-Atomen für die Herstellung der Polyetheresterpolyole sind neben hydroxyfunktionellen Startern auch aminofunktionelle Starter. Die Starter weisen meist Funktionalitäten von 2 bis 8 auf, in bestimmten Fällen aber auch Funktionalitäten bis 35. Ihre Molmassen betragen von 17 g/mol bis etwa 1200 g/mol. Bevorzugte Starter besitzen Funktionalitäten größer oder gleich 3. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff, sowie Mannichbasen. Es können auch hochfunktionelle Starterverbindungen auf Basis von hydrierten Stärkehydrolyseprodukten eingesetzt werden. Solche sind beispielsweise in EP-A 1 525 244 beschrieben. Beispiele für aminogruppenhaltige Starterverbindungen sind Ammoniak, Ethanolamin, Diethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte. Außerdem können als Starterverbindungen auch Ringöffnungsprodukte aus cyclischen Carbonsäureanhydriden und Polyolen eingesetzt werden. Beispiele sind Ringöffnungsprodukte aus Phthalsäureanhydrid, Bernsteinsäureanhydrid, Maleinsäureanhydrid einerseits und Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit oder Sorbitol andererseits. Es können natürlich auch Gemische verschiedener Starterverbindungen eingesetzt werden. Besonders bevorzugte Starterverbindungen sind ausgewählt aus der Gruppe bestehend aus Propylenglykol, Ethylenglykol, Butandiol, Hexandiol, Dodecandiol, Glycerin, Trimethylolpropan, Sorbit und Saccharose. Geeignete Alkylenoxide sind beispielsweise Ethylenoxid, Propylenoxid, 1,2-Butylenoxid bzw. 2,3-Butylenoxid und Styroloxid. Bevorzugt sind Propylenoxid und Ethylenoxid. Werden die Alkylenoxide nacheinander dosiert, so enthalten die hergestellten Produkte Polyetherketten mit Blockstrukturen. Produkte mit aus Oxyethyleneinheiten bestehenden Endblöcken sind beispielsweise durch erhöhte Konzentrationen an primären Endgruppen gekennzeichnet, welche den Systemen eine erhöhte Isocyanatreaktivität verleihen. Bevorzugte Polyetheresterpolyole haben einen hohen Anteil an Oxypropyleneinheiten. In einer bevorzugten Ausführungsform werden Polyetheresterpolyole auf Basis von Propylenoxid eingesetzt, in einer besonders bevorzugten Ausführungsform werden Polyetheresterpolyole auf Basis von ausschließlich Propylenoxid eingesetzt.

Geeignete Fettsäureester sind beispielsweise Baumwollsaatöl, Erdnussöl, Kokosöl, Leinöl, Palmkernöl, Olivenöl, Maisöl, Palmöl, Rizinusöl, Lesquerellaöl, Rapsöl, Sojaöl, Sonnenblumenöl, Jatrophaöl, Heringsöl, Sardinenöl und Talg. Ebenso geeignet sind Fettsäureester anderer mono- oder mehrfunktioneller Alkohole, sowie Fettsäureglyceride mit weniger als 3 Fettsäureresten pro Glycerinmolekül. Die Fettsäure(tri)glyceride und die Fettsäureester anderer mono- und mehrfunktioneller Alkohole können auch im Gemisch eingesetzt werden. Bevorzugt sind Polyetheresterpolyole auf Basis von Fettsäureestern auf Basis der Laurin- Myristin-, Palmitin-, Stearin-, Palmitolein-, Öl-, Eruca-, Linol-, Linolen-, Elaeostearin, Ricinol- oder Arachidonsäure oder deren Gemische. Ganz besonders bevorzugt sind Polyetheresterpolyole auf Basis von Sojaöl, Rizinusöl, Rapsöl oder einem Gemisch von wenigstens zwei der Vorgenannten. Die Verwendung von Polyetheresterpolyolen auf Basis von Speiseölen schließt den Fall ein, dass das Speiseöl bereits zur Herstellung von Speisen eingesetzt worden ist und durch diese Verwendung, z.B. durch Einwirkung von Wärme, modifiziert sein kann.

In einer weiteren Ausführungsform ist das hydrophobe Polyol A1 erhältlich aus der basenkatalysierten Umsetzung eines (Di-)Saccharids mit einem Alkylenoxid in Gegenwart eines Pflanzenöls. Im Rahmen dieser Anmeldung umfasst der Begriff "Saccharid" neben Zuckern auch Zuckeralkohole wie Sorbit.

Als Katalysatoren zur Herstellung der Polyetheresterpolyole sind basische Katalysatoren geeignet, beispielsweise (Erd-)Alkalimetallhydroxide, insbesondere Kaliumhydroxid, sowie deren Carbonsäuresalze, weiterhin aliphatische oder aromatische Amine. Bevorzugt werden zur Herstellung der Polyetheresterpolyole durch Umsetzung von Starterverbindungen mit Alkylenoxiden in Gegenwart von Fettsäureestern aliphatische oder aromatische Amine als Katalysatoren eingesetzt.

In einer bevorzugten Ausführungsform der Erfindung wird ein Polyetheresterpolyol eingesetzt, welches einen Gehalt an Fettsäurerestern von 5 bis 85 Gew.-%, bevorzugt 20 bis 60 Gew.-% bezogen auf das Gesamtgewicht des Polyetheresterpolyols aufweist.

Die Berechnung der Funktionalität der aus der EP 1923417 A1, der EP 2177555 A1 und WO 2023/057328 A1 bekannten hydrophoben Polyetheresterpolyole berechnet sich aus der (zahlenmittleren) Funktionalität der Zerewitinoff-aktive Wasserstoffatome enthaltenden Starterverbindung(en) (FS) und der ggf. vorhandenen zahlenmittleren Hydroxyfunktionalität des / der eingesetzten Fettsäureesters / Fettsäureester (FF) gemäß Gleichung (1).

$$(FS * \text{Mole Starterverbindung} + FF * \text{Mole Fettsäureester}) / (\text{Mole Starter} + \text{Mole Fettsäureester}) \quad (1)$$

Ein hydrophobes Polyetheresterpolyol erhalten durch basenkatalysierte Umsetzung von 2 mol Sorbit (FS = 6) und 3 mol Sojaöl (FF = 0) und Alkylenoxiden besitzt demnach beispielsweise die Funktionalität 2,4. Entsprechend weist ein auf Basis von 2,14 mol Glycerin, 0,71 mol Sojaöl und Alkylenoxiden hergestelltes hydrophobes Polyetheresterpolyol eine Funktionalität von 2,3 auf.

In einer Ausführungsform der Erfindung weist die Polyolzusammensetzung wenigstens 20,0 Gew.-%, bevorzugt wenigstens 52,0 Gew.-%, mehr bevorzugt 52,0 - 85 Gew.-%, noch mehr bevorzugt 52,0 - 70 Gew.-%, am meisten bevorzugt 53 - 62 Gew.-%, jeweils bezogen auf die Gesamtmenge der Polyolzusammensetzung, des hydrophoben Polyols A1 auf.

In der oder als Polyolzusammensetzung können erfindungsgemäß auch Mischungen unterschiedlicher hydrophober Polyole eingesetzt werden.

Die Polyolzusammensetzung enthält erfindungsgemäß wenigstens ein hydrophobes Polyol und kann darüber hinaus auch weitere Polyole enthalten. Beispiele solcher weiterer einsetzbarer Polyole sind Polyetherpolyole, Polyesterpolyole, Polycarbonatpolyole, Polyethercarbonatpolyole oder andere, nicht hydrophobe Polyetheresterpolyole, bevorzugt sind Polyetherpolyole und Polyesterpolyole. Solche Polyole sind dem Fachmann an sich bekannt. Im Sinne dieser Anmeldung handelt es sich bei einem Polyetheresterpolyol, insbesondere bei den erfindungsgemäß als hydrophobes Polyol A1 einsetzbaren Polyetheresterpolyolen, weder um ein Polyetherpolyol noch um ein Polyesterpolyol. Umgekehrt sind auch von den Begriffen "Polyetherpolyol" und "Polyesterpolyol" keine Polyetheresterpolyole umfasst.

Im Fall von Polyetherpolyolen, welche auf an sich bekannte Weise durch Polyaddition von Alkylenoxiden an polyfunktionelle Startersubstanzen in Gegenwart von Katalysatoren hergestellt werden können, werden diese bevorzugt aus einer Starterverbindung oder einem Starterverbindungsgemisch mit durchschnittlich 2,0 bis 8,0, insbesondere 3,0 bis 8,0, besonders bevorzugt 3,0 bis 6,0, Hydroxylgruppen pro Molekül wie Triethanolamin, Glycerin, Trimethylolpropan, Pentaerythrit, Sorbit und Saccharose, hergestellt. Neben solchen Polyalkoholen können auch aminische Starterverbindungen verwendet werden, zum Beispiel aromatische oder aliphatische Amine, insbesondere aromatische Diamine. Die Startersubstanzen können allein oder im Gemisch, unter anderem mit di- oder trifunktionellen Startersubstanzen wie Diethylenglykol, Dipropylenglykol, Triethylenglykol, Tripropylenglykol, 1,4-Butandiol, 1,6-Hexandiol, Glycerin oder Trimethylolpropan verwendet werden. Die bevorzugt eingesetzten Polyetherpolyole werden aus einem oder mehreren Alkylenoxiden hergestellt. Bevorzugt verwendete Alkylenoxide sind Ethylenoxid, Propylenoxid und Butylenoxid. Diese können allein oder im Gemisch verwendet werden. Bei Verwendung im Gemisch ist es möglich, die Alkylenoxide statistisch oder blockweise oder beides abwechselnd umzusetzen. Die resultierenden Polyetherpolyole können bevorzugt Hydroxylzahlen von 28 - 800 mg KOH/g, mehr bevorzugt 56 - 600 mg KOH/g, noch mehr bevorzugt 80 - 500 mg KOH/g aufweisen.

Im Fall von Polyesterpolyolen sind diese bevorzugt durch Veresterung von Phthalsäureanhydrid, Terephthalsäure, Isophthalsäure, Glutar-, Bernstein-, und/oder Adipinsäure mit Polyalkoholen Ethylen-, Diethylen-, Propylenglykol, Butandiol, Hexandiol, Trimethylolpropan, Glycerin und anderen, besonders bevorzugt in Gegenwart von Alkylenoxiden wie Ethylenoxid, Propylenoxid, Butylenoxid oder Mischungen daraus, erhältlich. Bevorzugt weisen die Polyesterpolyole Funktionalitäten von 1,5 - 3,0 auf, besonders bevorzugt von 1,8 - 2,7, mehr bevorzugt von 2,0 - 2,5. Bevorzugte Hydroxylzahlen für einsetzbare Polyesterpolyole liegen im Bereich von 28 - 800 mg KOH/g, besonders bevorzugt 56 - 600 mg KOH/g, mehr bevorzugt 112 - 500 mg KOH/g, noch mehr bevorzugt 200 - 400 mg KOH/g, am meisten bevorzugt 250 - 370 mg KOH/g. Besonders bevorzugt ist die Verwendung eines Umsetzungsproduktes aus Phthalsäure, Diethylenglykol und Ethylenoxid.

Im Fall von Polycarbonatpolyolen sind diese bevorzugt durch Umsetzung von Phosgen, Dimethylcarbonat, Diethylcarbonat oder Diphenylcarbonat mit difunktionellen Alkoholen oder Polyesterpolyolen oder Polyetherpolyolen erhältlich.

Im Fall von Polyethercarbonatpolyolen sind diese bevorzugt erhältlich aus der Umsetzung einer Startersubstanz, wie sie auch bei der Herstellung der Polyetherpolyole verwendet werden kann, mit Kohlendioxid und einem Alkylenoxid, vorzugsweise Ethylenoxid, Propylenoxid, Butylenoxid oder Mischungen aus wenigstens zwei hieraus, insbesondere bevorzugt in Gegenwart eines Doppelmetallcyanid-Katalysators.

In einer Ausführungsform umfasst die Polyolzusammensetzung neben dem hydrophoben Polyol A1 ein Polyetherpolyol A2, erhältlich aus der Umsetzung eines Saccharids, das ausgewählt ist aus Zuckern und Zuckeralkoholen, und wenigstens eines Polyalkohols mit einem Alkylenoxid, vorzugsweise Propylenoxid; ein Polyesterpolyol A3, erhältlich aus der Umsetzung einer Carbondisäure oder eines Anhydrids einer Carbondisäure und eines Dialkohols mit einem Alkylenoxid, vorzugsweise Ethylenoxid; ein Polyetherpolyol A4, erhältlich aus der Umsetzung eines aromatischen Diamins mit einem Alkylenoxid, vorzugsweise Propylenoxid; ein sich von A2 unterscheidendes Polyetherpolyol A5, erhältlich aus der Umsetzung eines wenigstens bifunktionellen, vorzugsweise bifunktionellen, Alkohols, mit einem Alkylenoxid, vorzugsweise Propylenoxid; oder eine Mischung aus wenigstens zwei der vorgenannten A2, A3, A4 und A5.

Bevorzugt weist das Polyetherpolyol A2 eine Funktionalität von 3,2 bis 6,2, bevorzugt 3,7 bis 5,7, mehr bevorzugt 4,2 bis 5,2, und eine Hydroxylzahl von 350 - 550, bevorzugt 400 - 500, mehr bevorzugt 420 - 480 mg KOH/g auf. Insbesondere bevorzugt umfasst das Saccharid Saccharose, Glucose, Sorbit oder eine Mischung aus zwei oder mehr der Vorgenannten oder besteht das Saccharid aus Saccharose, Glucose, Sorbit oder aus einer Mischung aus zwei oder mehr der Vorgenannten, und/oder umfasst der Polyalkohol Ethylenglykol, Diethylenglykol, 1,2-Propylenglykol, 1,3-Propylenglykol, 1,4-Butandiol, Neopentylglykol, Glycerin, Trimethylolpropan oder eine Mischung aus zwei oder mehr der Vorgenannten oder besteht der Polyalkohol aus Ethylenglykol, Diethylenglykol, 1,2-Propylenglykol, 1,3-Propylenglykol, 1,4-Butandiol, Neopentylglykol, Glycerin, Trimethylolpropan oder eine(r) Mischung aus zwei oder mehr der Vorgenannten. Bevorzugt wird das Polyetherpolyol A2 in einer Menge von 7,0 - 40,0 Gew.-%, besonders bevorzugt 10,0 - 35,0 Gew.-%, noch mehr bevorzugt 15,0 - 30,0 Gew.-%, jeweils bezogen auf die Gesamtmenge der Polyolzusammensetzung, eingesetzt.

Bevorzugt weist das Polyesterpolyol A3 eine Funktionalität von höchstens 2,5, bevorzugt höchstens 2,3, und eine Hydroxylzahl von 200 - 420, bevorzugt 250 - 370, mehr bevorzugt 280 - 340 mg KOH/g auf. Insbesondere bevorzugt besteht die Carbondisäure oder das Anhydrid einer Carbondisäure aus Adipinsäure, Bernsteinsäure, Malonsäure, Phthalsäure, Bernsteinsäureanhydrid, Phthalsäureanhydrid oder einer Mischung aus zwei oder mehr der Vorgenannten oder umfasst eine der Vorgenannten oder eine Mischung aus zwei oder mehr der Vorgenannten, und/oder der Dialkohol umfasst oder besteht aus Ethlyenglykol, Diethylenglykol, 1,2-Propylenglykol, 1,3-Propylenglykol, 1,4-Butandiol, Neopentylglykol, oder eine(r) Mischung aus zwei oder mehr der Vorgenannten. Bevorzugt wird das Polyesterpolyol A3 in einer Menge von 2,5 - 20,0 Gew.-%, besonders bevorzugt 4,0 - 16,0 Gew.-%, noch mehr bevorzugt 7,0 - 13,0 Gew.-%, jeweils bezogen auf die Gesamtmenge der Polyolzusammensetzung, eingesetzt.

Bevorzugt weist das Polyetherpolyol A4 eine Funktionalität von 3,5 bis 4,5, bevorzugt 3,8 bis 4,2, und eine Hydroxylzahl von 250 - 470, bevorzugt 300 - 420, mehr bevorzugt 320 - 400 mg KOH/g auf. Insbesondere bevorzugt umfasst das aromatische Diamin oder besteht das aromatische Diamin aus ein(em) Toluoldiamin, bevorzugt ortho-Toluoldiamin, ein(em) Phenylendiamin, oder eine(r) Mischung aus zwei oder mehr der Vorgenannten. Bevorzugt wird das Polyetherpolyol A4 in einer Menge von 0,5 - 10,0 Gew.-%, besonders bevorzugt 1,5 - 9,0 Gew.-%, noch mehr bevorzugt 2,5 - 6,5 Gew.-%, jeweils bezogen auf die Gesamtmenge der Polyolzusammensetzung, eingesetzt.

Bevorzugt weist das Polyetherpolyol A5 eine Funktionalität von höchstens 2,5, bevorzugt höchstens 2,3, und eine Hydroxylzahl von 60 - 180, bevorzugt 90 - 140, mehr bevorzugt 100 - 125 mg KOH/g auf. Insbesondere bevorzugt umfasst der wenigstens bifunktionelle Alkohol oder besteht der bifunktionelle Alkohol aus Ethlyenglykol, Diethylenglykol, 1,2-Propylenglykol, 1,3-Propylenglykol, 1,4-Butandiol, Neopentylglykol, oder eine(r) Mischung aus zwei oder mehr der Vorgenannten. Bevorzugt wird das Polyetherpolyol A5 in einer Menge von 0,5 - 10,0 Gew.-%, besonders bevorzugt 1,5 - 9,0 Gew.-%, noch mehr bevorzugt 2,5 - 6,5 Gew.-%, jeweils bezogen auf die Gesamtmenge der Polyolzusammensetzung, eingesetzt.

Besonders bevorzugt umfasst die Polyolzusammensetzung neben dem hydrophoben Polyol A1 ein Polyetherpolyol A2 aus Saccharose, Propylenglykol, Ethylenglykol und Propylenoxid mit einer Funktionalität von 4,2 - 5,2 und einer Hydroxylzahl von 420 - 480 mg KOH/g; ein Polyesterpolyol A3 aus Phthalsäure, Diethylenglykol und Ethylenoxid mit einer Funktionalität von 2,0 und einer Hydroxylzahl von 280 - 340 mg KOH/g; ein Polyetherpolyol A4 aus ortho-TDA und Propylenoxid mit einer Funktionalität von 4 und einer Hydroxylzahl von 320 - 400 mg KOH/g; und ein Polyetherpolyol A5 aus Propylenglykol und Propylenoxid mit einer Funktionalität von 2 und einer Hydroxylzahl von 100 - 125 mg KOH/g. Insbesondere besteht die Polyolzusammensetzung aus den vorgenannten Polyolen A2 - A5 und dem hydrophoben Polyol A1.

Mehr bevorzugt enthält diese im vorigen Absatz beschriebene Polyolzusammensetzung 10,0 - 35,0 Gew.-%

A2, 2,5 - 20,0 Gew.-% A3, 0,5 - 10,0 Gew.-% A4 und 0,5 - 10,0 Gew.-% A5, jeweils bezogen auf die Gesamtmenge der Polyolzusammensetzung. Noch mehr bevorzugt enthält diese im vorigen Absatz beschriebene Polyolzusammensetzung 15,0 - 30,0 Gew.-% A2, 7,0 - 13,0 Gew.-% A3, 2,5 - 6,5 Gew.-% A4 und 2,5 - 6,5 Gew.-% A5, jeweils bezogen auf die Gesamtmenge der Polyolzusammensetzung. Insbesondere enthält sie, bezogen auf die Gesamtmenge der Polyolzusammensetzung, 40 - 60 Gew.-% oder 52 - 60 Gew.-% hydrophobes Polyol A1, wobei sich die Summen der Polyole A1, A2, A3, A4 und A5 bevorzugt zu 100 Gew.-% summieren.

Am meisten bevorzugt handelt es sich bei dem hydrophoben Polyol A1, insbesondere auch in den Polyolzusammensetzungen der vorigen beiden Absätze, um ein Polyetheresterpolyol mit einer Funktionalität von $\geq 5{,}3$ bis $\leq 6{,}1$ und einer Hydroxylzahl von 350 - 430 mg KOH/g, erhältlich aus der Umsetzung von Saccharose mit Propylenoxid in Gegenwart von Sojaöl.

In einer weiteren Ausführungsform handelt es sich bei dem halogenierten Olefin um ein Hydrofluorolefin ("HFO"), ein Hydrochlorfluorolefin ("HCFO") oder eine Mischung aus den Vorgenannten.

Geeignete HCFOs umfassen solche mit 2 bis 6, vorzugsweise 2 bis 4 oder 3 bis 4, Kohlenstoffatomen, beispielsweise 1-Chlor-3,3,3-trifluorpropen (HCFO-1233zd, E- und/oder Z-Isomere), 2-Chlor-3,3,3-trifluorpropen (HCFO-1233xf), HCFO1223, 1,2-Dichlor-1,2-difluorethen (E- und/oder Z-Isomere), 3,3-Dichlor-3-fluorpropen, 2-Chlor-1,1,1,4,4,4-hexafluor-2-buten (E- und/oder Z-Isomere), 2-Chlor-1,1,1,3,4,4,4-heptafluor-2-buten (E- und/oder Z-Isomere). Auch Mischungen aus zwei oder mehr der Vorgenannten können eingesetzt werden. In einigen Ausführungsformen beträgt der Siedepunkt des HCFOs bei atmosphärischem Druck mindestens -25 °C, mindestens -20 °C oder in einigen Fällen mindestens -19 °C und maximal 40 °C oder weniger, z. B. 35 °C oder weniger, oder in einigen Fällen 33 °C oder weniger. Das HCFO kann bei atmosphärischem Druck einen Siedepunkt von beispielsweise -25 °C bis 40 °C oder -20 °C bis 35 °C oder -19 °C bis 33 °C haben. Ein besonders bevorzugtes HCFO ist 1-Chlor-3,3,3-trifluorpropen (HCFO-1233zd, E- und/oder Z-Isomere).

Geeignete HFOs umfassen solche mit 2 bis 6, vorzugsweise 2 bis 4 oder 3 bis 4, Kohlenstoffatome, beispielsweise 1,3,3,3-Tetrafluorpropen (HFO-1234ze, E- und/oder Z-Isomere), 1,2,3,3,3-Pentafluorpropen (E- und/oder Z-Isomere), 1,1,1,4,4,4-Hexafluorbuten (HFO-1336mzz, E- und/oder Z-Isomere), 1,1,2,3,3,4,4-Heptafluor-1-buten, 3,3,3-Triflur-2-(trifluormethyl)propen, 1,1,1-Triflur-2-buten (E- und/oder Z-Isomere) und Mischungen aus zwei oder mehr der Vorgenannten. In einigen Ausführungsformen beträgt der Siedepunkt des HFOs bei atmosphärischem Druck mindestens -25 °C, mindestens -20 °C oder in einigen Fällen mindestens -19 °C und maximal 40 °C oder weniger, z. B. 35 °C oder weniger, oder in einigen Fällen 33 °C oder weniger. Das HFO kann bei atmosphärischem Druck einen Siedepunkt von beispielsweise -25 °C bis 40 °C oder -20 °C bis 35 °C oder -19 °C bis 33 °C haben. Ein besonders bevorzugtes HFO ist 1,3,3,3-Tetrafluorpropen (E- und/oder Z-Isomere).

Erfindungsgemäß werden 1,0 - 30 Gew.-% physikalisches Treibmittel eingesetzt, wobei wenigstens 1,0 Gew.-% halogenierte Olefine umfasst sind, jeweils bezogen auf die Gesamtmenge der Polyolzusammensetzung. Bevorzugt umfasst das physikalische Treibmittel 2,0 - 28,0 Gew.-%, besonders bevorzugt 3,0 - 27,0 Gew.-%, mehr bevorzugt 3,0 - 15,0 Gew.-%, am meisten bevorzugt 4,0 - 12,0 Gew.-% halogenierte Olefine, jeweils bezogen auf die Gesamtmenge der Polyolzusammensetzung.

In einer weiteren Ausführungsform umfasst das physikalische Treibmittel weiterhin einen Kohlenwasserstoff, insbesondere einen 3 bis 6 Kohlenstoffatome aufweisenden Kohlenwasserstoff. Geeignete Kohlenwasserstoffe zur Verwendung in der Treibmittelzusammensetzung umfassen unter anderem Butan, n-Pentan, Cyclopentan, Hexan und/oder Isopentan (d. h. 2-Methylbutan). In einigen Ausführungsformen wird der Kohlenwasserstoff, zum Beispiel Cyclopentan, n-Pentan und/oder Isopentan, in einer Menge von mindestens 1,0 Gew.-%, wie z.B. 1,0 bis 30,0 Gew.-%, bevorzugt 2,0 - 20,0 Gew.-%, mehr bevorzugt 3,0 - 15,0 Gew.-%, am meisten bevorzugt 3,0 - 10 Gew.-%, bezogen auf die Gesamtmenge der Polyolzusammensetzung, eingesetzt. Der Kohlenwasserstoff kann in einer Menge von mindestens 10,0 Gew.-%, in einigen Fällen mindestens 15,0 Gew.-%, 15,0 - 75,0 Gew.- %, mindestens 20,0 Gew.-%, 20,0 - 65,0 Gew.-%, oder 20,0 - 50,0 Gew.-%, bezogen auf die Gesamtmenge des physikalischen Treibmittels eingesetzt werden.

Bei dem wenigstens einen Katalysator kann es sich um jeglichen konventionellen Katalysator handeln, der zur Verwendung in der Herstellung von Polyurethanhartschaumstoffen geeignet ist, insbesondere um Gelkatalysatoren und/oder Treibkatalysatoren, das heißt Katalysatoren, die die Reaktion von Polyolen und Isocyanaten, und/oder Katalysatoren, die die Reaktion von Isocyanaten mit Wasser, sofern es vorhanden ist, katalysieren. Dazu gehören unter anderem Amine, Phosphane, Metallsalze, Metallchelate, Alkoholate und Phenolate. Beispiele solcher Katalysatoren sind zum Einen Aminverbindungen wie Triethylendiamin, 2,3-Dimethyl-3,4,5,6-tetrahydropyrimidin, Triethylamin, Tributylamin, Dimethylbenzylamin, N-Methylmorpholin, N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin, Triethanolamin, Triisopropanolamin, N-Methyldiethanolamin, N-Ethyldiethanolamin, N,N-Dimethylcyclohexylamin, Pentamethyldiethylentriamin, Tris(dimethylaminomethyl)phenol und Dimethylethanolamin, zum Anderen Organometallverbindungen, insbesondere Zinn- oder Bismutsalze, bevorzugt Zinn- oder Bismutsalze organischer Säuren wie Zinnacetat, Zinnoctoat, Zinn-2-ethylhexanoat, Zinnlaurat, Dibutylzinndiacetat, Dibutylzinndilaurat, Dibutylzinnmaleat, Dioctylzinndiacetat, Bismutneodecanoat, Bismut-2-ethylhexanoat, Bismutoctoat. Es können auch Mischungen von zwei oder mehr Katalysatoren eingesetzt werden.

Bevorzugt wird der wenigstens eine Katalysator in einer Menge von 0,1 - 5,0 Gew.-%, mehr bevorzugt 0,5 - 4,5 Gew.-%, noch mehr bevorzugt 1,0 - 4,0 Gew.-%, weiterhin mehr bevorzugt 1,5 - 3,5 Gew.-%, am meisten bevorzugt 2,0 - 3,0 Gew.-%, jeweils bezogen auf die Gesamtmenge der Polyolzusammensetzung eingesetzt.

Bevorzugt wird eine Mischung aus Pentamethyldiethylentriamin, Tris(dimethylaminomethyl)phenol und N,N-Dimethylcyclohexylamin verwendet, besonders bevorzugt eine Mischung aus 1,00 - 2,10 Gew.-% Pentamethyldiethylentriamin, 0,20 - 0,80 Gew.-% Tris(dimethylaminomethyl)phenol und 0,10 - 0,65 Gew.-% N,N-Dimethylcyclohexylamin, jeweils bezogen auf die Gesamtmenge der Polyolzusammensetzung.

Optional kann ein Stabilisator verwendet werden, wobei grundsätzlich jeder konventionelle Stabilisator, der zur Herstellung von Polyurethanhartschaumstoffen verwendet werden kann, einsetzbar ist. Insbesondere können silikonbasierte Zellstabilisatoren eingesetzt werden. Bei diesen Verbindungen handelt es sich vorzugsweise um solche, die eine amphiphile Struktur aufweisen und in der Lage sind, die Oberflächenspannung der Polyolzusammensetzung zu reduzieren. Vorzugsweise weist der silikonbasierte Zellstabilisator einen Molekülteil mit siliziumorganischen Bausteinen, wie Dimethylsiloxan oder Methylphenylsiloxan, und einen Molekülteil mit einer chemischen Struktur, die den Polyolen ähnelt, auf.

In einer Ausführungsform wird der Stabilisator in einer Menge von 0,1 - 3,5 Gew.-%, bevorzugt 0,5 - 3,0 Gew.-%, mehr bevorzugt 1,0 - 2,5 Gew.-%, am meisten bevorzugt 1,2 - 2,1 Gew.-%, jeweils bezogen auf die Gesamtmenge Polyolzusammensetzung.

Als weitere Hilfs- und/oder Zusatzstoffe können gegebenenfalls Paraffine, Fettalkohole, Pigmente und/oder Farbstoffe, flammhemmende Substanzen, ferner Stabilisatoren gegen Alterungs- und Witterungseinflüsse, Weichmacher und fungistatisch und bakteriostatisch wirkende Substanzen, sowie Füllstoffe wie Bariumsulfat, Kieselgur, Ruß oder Schlämmkreide, Zellregler, Reaktionsverzögerer und Wasser eingesetzt werden.

Im erfindungsgemäßen Verfahren zur Herstellung eines Polyurethanhartschaumstoffs wird neben der erfindungsgemäßen gegenüber Isocyanaten reaktiven Zusammensetzung auch ein Polyisocyanat bereitgestellt, die man zu dem gewünschten Polyurethanhartschaumstoff reagieren lässt. Grundsätzlich ist jedes üblicherweise zur Herstellung solcher PUR-Hartschaumstoffe verwendete Polyisocyanat, also jedes übliche aliphatische, cycloaliphatische und insbesondere aromatische Di- und/oder Polyisocyanat geeignet.

Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebiger Isomerenzusammensetzung, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'- Diphenylmethandiisocyanat (MDI) und/oder höhere Homologe (pMDI), 1,3- und/oder 1,4-Bis-(2- isocyanato-prop-2-yl)-benzol (TMXDI), 1,3-Bis-(isocyanatomethyl)benzol (XDI). Neben den vorstehend genannten Polyisocyanaten können anteilig auch modifizierte Polyisocyanate mit Uretdion-, Isocyanurat-, Urethan-, Carbodiimid-, Uretonimin-, Allophanat- oder Biuretstruktur eingesetzt werden. Als Isocyanate werden vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt von zwischen 60 und 100 Gew.-%, bevorzugt zwischen 70 und 95 Gew.-%, besonders bevorzugt zwischen 80 und 90 Gew.-%. Der NCO-Gehalt des verwendeten Polyisocyanates sollte vorzugsweise über 25 Gew.-%, bevorzugt über 30 Gew.-%, besonders bevorzugt über 32 Gew.-% liegen. Der NCO-Gehalt wird bestimmt nach EN ISO 11909:2007 "Bestimmung des Isocyanat-Gehaltes".

Die Anzahl der NCO-Gruppen in dem Polyisocyanat und die Anzahl der gegenüber Isocyanaten reaktiven Wasserstoffe der gegenüber Isocyanaten reaktiven Zusammensetzung können beispielsweise in einem Zahlenverhältnis von ≥ 50:100 bis ≤ 300:100 zueinander stehen. Zur Herstellung der Polyurethan-Hartschaumstoffe werden in der Regel die gegenüber Isocyanaten reaktive Zusammensetzung und das Polyisocyanat in solchen Mengen zur Umsetzung gebracht, dass die Isocyanat-Kennzahl der Rezeptur 80 - 150, bevorzugt 90 - 130, besonders bevorzugt 95 - 125 beträgt. In diesem Bereich werden bevorzugt Urethangruppen gebildet.

Unter dem Index (auch Isocyanat-Index, Isocyanat-Kennzahl, oder Kennzahl genannt) wird der Quotient aus der tatsächlich eingesetzten Stoffmenge [mol] an Isocyanat-Gruppen und der tatsächlich eingesetzten Stoffmenge [mol] an gegenüber Isocyanaten reaktiven Wasserstoffatomen, multipliziert mit 100, verstanden:

$$\text{Index} = (\text{Isocyanat-Gruppen [mol]} / \text{gegenüber Isocyanaten reaktive Wasserstoffatome [mol]}) \cdot 100$$

Die Erfindung soll anhand der nachfolgenden Beispiele und Vergleichsbeispiele näher erläutert werden, ohne dass sie in ihrem Umfang durch die Beispiele eingeschränkt wird.

**Beispiele**

Ausgangsprodukte

Polyol 1: Polyetheresterpolyol aus Saccharose, Sojaöl und Propylenoxid mit einer Funktionalität von 5,7 und einer Hydroxylzahl von 390 mg KOH/g. Bei seiner Herstellung wurde zunächst Saccharose in Gegenwart von Wasser mit einer Teilmenge des Propylenoxids in Ggw. eines Amins als Katalysator umgesetzt, das Wasser sodann abdestilliert, Sojaöl zugegeben und schließlich die restliche Menge an Propylenoxid dosiert.

Polyol 2: Polyetherpolyol aus Saccharose, Propylenglykol, Ethylenglykol und Propylenoxid mit einer Funktionalität von 4,7 und einer Hydroxylzahl von 450 mg KOH/g.

Polyol 3: Polyesterpolyol aus Phthalsäure, Diethylenglykol und Ethylenoxid mit einer Funktionalität von 2 und einer Hydroxylzahl von 310 mg KOH/g.

Polyol 4: Polyetherpolyol aus o-TDA und Propylenoxid mit einer Funktionalität von 4 und einer Hydroxylzahl von 360 mg KOH/g.

Polyol 5: Polyetherpolyol aus Glycerin und Propylenoxid mit einer Funktionalität von 3 und einer Hydroxylzahl von 235 mg KOH/g.

Polyol 6: Polyetherpolyol aus Propylenglykol und Propylenoxid mit einer Funktionalität von 2 und einer Hydroxylzahl von 112 mg KOH/g.

Stabilisator: Tegostab® B 8491, Evonik Industries AG

Katalysator 1: Pentamethyldiethylentriamin

Katalysator 2: Tris(dimethylaminomethyl)phenol

Katalysator 3: N,N-Dimethylcyclohexylamin

Treibmittel 1: Cyclopentan

Treibmittel 2: 50/50 (w/w)-Gemisch aus cis- und trans-1,1,1,4,4,4-Hexafluor-2-buten

Treibmittel 3: trans-1-Chlor-3,3,3-trifluorpropen

Isocyanat: polymeres MDI enthaltend 49,4 Gew.-% Diphenylmethan-4,4'-diisocyanat (mMDI), Viskosität von $\geq$ 160 mPas bis $\leq$ 240 mPas bei 25 °C, NCO-Gehalt 31,5 Gew.-%, Covestro Deutschland AG.

Hydroxylzahl (OH-Zahl): die Bestimmung der OH-Zahl erfolgte gemäß DIN 53240-2 (2007).

Isocyanatgehalt: die Bestimmung des Isocyanat-Gehalts erfolgte gemäß EN ISO 11909:2007 "Bestimmung des Isocyanat-Gehaltes"

Beispiele 1 - 15 und Vergleichsbeispiele 1 - 5 (Tabelle 1):

Herstellung der Schaumstoffe

An einem Pendraulikrührer wurden die Polyolzusammensetzungen aus den in Tabelle 1 genannten Mengen (in "pbw", das heißt in Gewichtsteilen) an Polyolen, Wasser, Stabilisator und Katalysatoren mit den dort ebenfalls aufgeführten Mengen an Treibmitteln homogen verrührt, so dass gegenüber Isocyanaten reaktive Zusammensetzungen erhalten wurden. Alle Komponenten wurden dabei auf 20°C temperiert. Die Hartschaumstoffe wurden im sogenannten Handmischverfahren hergestellt. Dabei wurden die gegenüber Isocyanaten reaktive Zusammensetzungen und eine entsprechende Menge Isocyanat in einem geeigneten Behälter mit einem Pendraulikrührer für eine bestimmte Zeit miteinander vermischt. Anschließend wurde das reagierende Gemisch in eine geeignete auf 40 °C temperierte Form gegossen. Am Freischaum, der in einer offenen Form ausreagiert, wurden Reaktivität und freie Rohdichte ermittelt. Am verdichteten Schaum, der in einer geschlossenen Form ausreagierte, wurden die Wärmeleitzahl und der Nachtrieb ermittelt.

Prüfung der Rohdichte und der Schwindung

Bei der Bestimmung der Kernrohdichte, wurde ein $10 \times 10 \times 10$ cm$^3$ großer Prüfkörper 24 Stunden nach Herstellung des Schaumstoffes aus dessen Mitte geschnitten. Die Masse des Probekörpers wurde gemessen. Anschließend wurde ein mit Wasser gefüllter Behälter auf einer Waage platziert und tariert. Mit Hilfe eines Stativs wurde der Probekörper im Wasser versenkt und der Wert auf der Waage abgelesen. Die Freie Rohdichte wurde in g/ml aus dem Verhältnis der Werte ermittelt und in g/l (oder kg/m$^3$) umgerechnet.

Um die Schwindung zu ermitteln, wurde die Rohdichte des Probekörpers nach weiteren 24 Stunden erneut durch die beschriebene Tauchmethode ermittelt. Da sich die Masse des Probekörpers nicht veränderte, konnte die Schwindung (Volumenabnahme) des Schaumstoffes durch den Quotienten aus der Rohdichte nach 24 h und nach 48 h in % ermittelt werden.

Prüfung der Wärmeleitzahl

Die Wärmeleitzahl wurde an einem verdichteten Schaumstoff, hergestellt nach dem Handmischverfahren mit einer 10%-igen Verdichtung und 10 min Entformzeit, nach der Wärmefluss-Methode DIN 52616 bei einer Mittentemperatur von 10 °C bestimmt. 10%-ige Verdichtung bedeutet hierbei, dass für das Ausschäumen einer Form des Volumens V zunächst die Menge an Ausgangsmaterialien bestimmt wird, die frei geschäumt einen Schaumstoff des Volumens V erzielt, und die so bestimmte Menge an Ausgangsmaterialien mit dem Faktor 1,1 multipliziert wird.

Prüfung des Nachtriebs

Der Nachtrieb eines Probekörpers wurde an einem verdichteten Schaumstoff mit einer Einfüllrohdichte von 40 kg/m$^3$ jeweils in Doppelbestimmung ermittelt. Der Schaum wurde nach dem Handmischverfahren hergestellt und in eine auf 40 °C temperierte Form, die jeweils mit Pappdeckeln als oberer und unterer Deckschicht versehen ist, gegossen. Die Prüfkörper wurden nach 4 min Formstandzeit aus der Form entnommen. Nach 30 min wurde der Nachtrieb mittels eines elektropneumatischen Tasters im mittleren Bereich des Prüfkörpers gemessen.

**Tabelle 1**

| | Einheit | V.-Bsp. 1 | V.-Bsp. 2 | V.-Bsp. 3 | Bsp. 1 | Bsp. 2 | Bsp. 3 | V.-Bsp. 4 | Bsp. 4 | Bsp. 5 | Bsp. 6 |
|---|---|---|---|---|---|---|---|---|---|---|---|
| Polyol 1 | pbw | - | 56,07 | 56,07 | 56,07 | 56,07 | 56,07 | 56,07 | 56,07 | 56,07 | 56,07 |
| Polyol 2 | pbw | 56,08 | 18,69 | 18,69 | 18,69 | 18,69 | 18,69 | 18,69 | 18,69 | 18,69 | 18,69 |
| Polyol 3 | pbw | - | 9,35 | 9,35 | 9,35 | 9,35 | 9,35 | 9,35 | 9,35 | 9,35 | 9,35 |
| Polyol 4 | pbw | 32,71 | 4,67 | 4,67 | 4,67 | 4,67 | 4,67 | 4,67 | 4,67 | 4,67 | 4,67 |
| Polyol 5 | pbw | 4,67 | - | - | - | - | - | - | - | - | - |
| Polyol 6 | pbw | - | 4,67 | 4,67 | 4,67 | 4,67 | 4,67 | 4,67 | 4,67 | 4,67 | 4,67 |
| Wasser | pbw | 2,24 | 2,80 | 2,80 | 2,80 | 2,80 | 2,80 | 2,80 | 2,80 | 2,80 | 2,80 |
| Stabilisator | pbw | 1,68 | 1,68 | 1,68 | 1,68 | 1,68 | 1,68 | 1,68 | 1,68 | 1,68 | 1,68 |
| Katalysator 1 | pbw | 1,67 | 0,56 | 0,56 | 0,56 | 0,56 | 0,56 | 0,56 | 0,56 | 0,56 | 0,56 |
| Katalysator 2 | pbw | 0,56 | 0,75 | 0,75 | 0,75 | 0,75 | 0,75 | 0,75 | 0,75 | 0,75 | 0,75 |
| Katalysator 3 | pbw | 0,37 | 0,75 | 0,75 | 0,75 | 0,75 | 0,75 | 0,75 | 0,75 | 0,75 | 0,75 |
| Polyol-zusammensetzung | pbw | 100 | 100 | 100 | 100 | 100 | 100 | 100 | 100 | 100 | 100 |
| Treibmittel 1 | pbw | 14,5 | 11 | - | - | - | - | - | - | - | - |
| Treibmittel 2 | pbw | - | - | 32 | 26 | 15 | 5 | - | - | - | - |
| Treibmittel 3 | pbw | - | - | - | - | - | - | 32 | 20 | 15 | 5 |
| Isocyanat | pbw | 147,18 | 139,84 | 139,84 | 139,84 | 139,84 | 139,84 | 139,84 | 139,84 | 139,84 | 139,84 |
| Kennzahl | | 115 | 110 | 110 | 110 | 110 | 110 | 110 | 110 | 110 | 110 |
| Freie Rohdichte | kg/m³ | 24,58 | 23,19 | 24,33 | 26,13 | 30,99 | 42,35 | 22,00 | 26,59 | 28,41 | 38,16 |
| Schwindung | % | -3,53 | -14,43 | -2,68 | -1,06 | -0,28 | -1,75 | -19,69 | -1,16 | -1,53 | -1,57 |
| Nachtrieb 4' FSZ Ø | mm | 2,44 | 0,92 | 0,94 | 1,15 | 0,17 | n.b. | 4,39 | 2,22 | 1,11 | n.b. |
| Rohdichte Ø | kg/m³ | 30,55 | 32,10 | 32,45 | 33,50 | n.b. | n.b. | 24,95 | 31,15 | n.b. | n.b. |
| WLZ Ø | mW/mK | 20,22 | 20,49 | 19,21 | 18,65 | n.b. | n.b. | 19,99 | 19,49 | n.b. | n.b. |

**Tabelle 1 - Fortsetzung**

|  | Einheit | Bsp. 7 | Bsp. 8 | Bsp. 9 | Bsp. 10 | Bsp. 11 | Bsp. 12 | Bsp. 13 | Bsp. 14 | Vgl.-Bsp. 5 | Bsp. 15 |
|---|---|---|---|---|---|---|---|---|---|---|---|
| Polyol 1 | pbw | 56,07 | 56,07 | 56,07 | 56,07 | 56,07 | 56,07 | 48,00 | 48,00 | 48,00 | 48,00 |
| Polyol 2 | pbw | 18,69 | 18,69 | 18,69 | 18,69 | 18,69 | 18,69 | 26,76 | 26,76 | 26,76 | 26,76 |
| Polyol 3 | pbw | 9,35 | 9,35 | 9,35 | 9,35 | 9,35 | 9,35 | 9,35 | 9,35 | 9,35 | 9,35 |
| Polyol 4 | pbw | 4,67 | 4,67 | 4,67 | 4,67 | 4,67 | 4,67 | 4,67 | 4,67 | 4,67 | 4,67 |
| Polyol 5 | pbw | - | - | - | - | - | - | - | - | - | - |
| Polyol 6 | pbw | 4,67 | 4,67 | 4,67 | 4,67 | 4,67 | 4,67 | 4,67 | 4,67 | 4,67 | 4,67 |
| Wasser | pbw | 2,80 | 2,80 | 2,80 | 2,80 | 2,80 | 2,80 | 2,80 | 2,80 | 2,80 | 2,80 |
| Stabilisator | pbw | 1,68 | 1,68 | 1,68 | 1,68 | 1,68 | 1,68 | 1,68 | 1,68 | 1,68 | 1,68 |
| Katalysator 1 | pbw | 0,56 | 0,56 | 0,56 | 0,56 | 0,56 | 0,56 | 0,56 | 0,56 | 0,56 | 0,56 |
| Katalysator 2 | pbw | 0,75 | 0,75 | 0,75 | 0,75 | 0,75 | 0,75 | 0,75 | 0,75 | 0,75 | 0,75 |
| Katalysator 3 | pbw | 0,75 | 0,75 | 0,75 | 0,75 | 0,75 | 0,75 | 0,75 | 0,75 | 0,75 | 0,75 |
| Polyol-zusammensetzung | pbw | 100 | 100 | 100 | 100 | 100 | 100 | 100 | 100 | 100 | 100 |
| Treibmittel 1 | pbw | 3,50 | 5,50 | 7,50 | 3,50 | 5,50 | 7,50 | 11 | - | - | - |
| Treibmittel 2 | pbw | - | - | - | 17,0 | 13,0 | 8,5 | - | 26 | - | - |
| Treibmittel 3 | pbw | 13,5 | 10 | 6,5 | - | - | - | - | - | 32 | 20 |
| Isocyanat | pbw | 139,84 | 139,84 | 139,84 | 139,84 | 139,84 | 139,84 | 141,1 | 141,1 | 141,1 | 141,1 |
| Kennzahl |  | 110 | 110 | 110 | 110 | 110 | 110 | 110 | 110 | 110 | 110 |
| Freie Rohdichte | kg/m³ | 26,45 | 26,27 | 25,32 | 26,20 | 25,22 | 24,97 | 24,90 | 24,53 | 21,19 | 24,40 |
| Schwindung | % | -1,48 | -1,63 | -2,69 | -1,14 | -1,76 | -1,60 | -2,79 | -1,90 | -21,07 | -4,50 |
| Nachtrieb 4' FSZ Ø | mm | 2,60 | 2,75 | 2,35 | 1,31 | 0,50 | 1,47 | 0,83 | 1,40 | 3,44 | 1,64 |
| Rohdichte Ø | kg/m³ | 30,50 | 29,90 | 31,55 | 31,45 | 29,95 | 29,65 | 30,10 | 32,15 | 25,4 | 36,7 |
| WLZ Ø | mW/mK | 19,77 | 19,80 | 19,91 | 19,14 | 19,55 | 20,30 | 20,27 | 18,47 | 19,79 | 19,35 |

Der Vergleich der erfindungsgemäßen Beispiele mit den nicht erfindungsgemäßen Vergleichsbeispielen 1 - 5 zeigt, dass nur mit der erfindungsgemäßen Kombination aus hydrophobem Polyol und höchstens 30 Gew.-%, bezogen auf die Gesamtmenge der Polyolzusammensetzung, halogenierte Olefine enthaltendem Treibmittel verbesserte Ergebnisse für Schwindung und/oder Nachtrieb bei vergleichbarer Wärmeleitfähigkeit erzielt wurden. Insbesondere verbessert zeigen sich solche Schaumstoffe, die aus Polyolzusammensetzungen mit 52 Gew.-%, bezogen auf die Gesamtmenge der Polyolzusammensetzung, oder mehr des hydrophoben Polyols hergestellt wurden (Bsp. 1 - 12).

Dementgegen resultieren herkömmliche Systeme ohne hydrophobes Polyol und halogenierte Olefine enthaltendes Treibmittel (V.-Bsp. 1) bzw. mit hydrophobem Polyol, aber ohne halogenierte Olefine enthaltendes Treibmittel (V.-Bsp. 2) in Schaumstoffen mit erhöhter Schwindung (V.-Bsp. 1 und 2) bzw. erhöhtem Nachtrieb (V.-Bsp. 1).

Auch die Schaumstoffe, die aus solchen gegenüber Isocyanaten reaktiven Zusammensetzungen erhalten wurden, die sowohl halogenierte Olefine enthaltende Treibmittel als hydrophobes Polyol aufweisen, zeigen erhöhte Schwindung und/oder Nachtrieb, wenn der Mengenanteil des halogenierten Olefins mehr als 30 Gew.-%, bezogen auf die Gesamtmenge der Polyolzusammensetzung, beträgt (V.-Bsp. 3 - 5), wobei das Vergleichsbeispiel 5 den nächstliegenden Stand der Technik (WO 2022/132075 A1) widerspiegelt.

## Patentansprüche

1. Gegenüber Isocyanaten reaktive Zusammensetzung umfassend

    i. eine Polyolzusammensetzung umfassend

        A. wenigstens ein Polyol, umfassend
        A1. wenigstens ein hydrophobes Polyol, insbesondere ein fettchemisches Polyol, A1,
        B. wenigstens einen Katalysator
        C. gegebenenfalls wenigstens einen Stabilisator
        D. gegebenenfalls weitere Hilfs- und/oder Zusatzstoffe

    ii. 1,0 - 30,0 Gew.-%, bezogen auf die Gesamtmenge der Polyolzusammensetzung, eines physikalischen Treibmittels umfassend wenigstens 1,0 Gew.-%, bezogen auf die Gesamtmenge der Polyolzusammensetzung, eines halogenierten Olefins.

2. Gegenüber Isocyanaten reaktive Zusammensetzung gemäß Anspruch 1, wobei das wenigstens eine hydrophobe Polyol A1 ein Polyetheresterpolyol ist.

3. Gegenüber Isocyanaten reaktive Zusammensetzung gemäß Anspruch 2, wobei das Polyetheresterpolyol durch basen-katalysierte Umsetzung von Starterverbindungen mit Zerewitinoff-aktiven Wasserstoffatomen mit einem Alkylenoxid in Gegenwart von Fettsäureestern erhältlich ist.

4. Gegenüber Isocyanaten reaktive Zusammensetzung gemäß einem der Ansprüche 1 bis 3, wobei die Polyolzusammensetzung wenigstens 52,0 Gew.-%, bezogen auf die Gesamtmenge der Polyolzusammensetzung, des hydrophoben Polyols A1 umfasst.

5. Gegenüber Isocyanaten reaktive Zusammensetzung gemäß einem der Ansprüche 1 bis 4, wobei es sich bei dem halogenierten Olefin um ein Hydrofluorolefin, ein Hydrochlorfluorolefin oder um eine Mischung aus den Vorgenannten handelt.

6. Gegenüber Isocyanaten reaktive Zusammensetzung gemäß einem der Ansprüche 1 bis 5, wobei das physikalische Treibmittel weiterhin einen 3 bis 6 Kohlenstoffatome aufweisenden Kohlenwasserstoff umfasst.

7. Gegenüber Isocyanaten reaktive Zusammensetzung gemäß einem der Ansprüche 1 bis 6, wobei das hydrophobe Polyol A1 erhältlich ist aus der basen-katalysierten Umsetzung eines Saccharids, das ausgewählt ist aus Zuckern und Zuckeralkoholen, mit einem Alkylenoxid in Gegenwart von einem Pflanzenöl.

8. Gegenüber Isocyanaten reaktive Zusammensetzung gemäß einem der Ansprüche 1 bis 7, wobei das hydrophobe Polyol A1 eine Funktionalität von 4,0 - 8,0 und eine Hydroxylzahl, bestimmt gemäß DIN 53240-2, Stand November 2007, von 280 - 500 mg KOH/g aufweist.

9. Gegenüber Isocyanaten reaktive Zusammensetzung gemäß einem der Ansprüche 1 bis 8, wobei die Polyolzusammensetzung weiterhin umfasst:

A2. ein Polyetherpolyol A2, erhältlich aus der Umsetzung eines Saccharids, das ausgewählt ist aus Zuckern und Zuckeralkoholen,
und wenigstens eines Polyalkohols mit einem Alkylenoxid, vorzugsweise Propylenoxid,
A3. ein Polyesterpolyol A3, erhältlich aus der Umsetzung einer Carbondisäure oder eines Anhydrids einer Carbondisäure und eines Dialkohols mit einem Alkylenoxid, vorzugsweise Ethylenoxid,
A4. ein Polyetherpolyol A4, erhältlich aus der Umsetzung eines aromatischen Diamins mit einem Alkylenoxid, vorzugsweise Propylenoxid,
A5. ein sich von A2 unterscheidendes Polyetherpolyol A5, erhältlich

aus der Umsetzung eines wenigstens bifunktionellen, vorzugsweise bifunktionellen, Alkohols, mit einem Alkylenoxid, vorzugsweise Propylenoxid,
oder eine Mischung aus wenigstens zwei der vorgenannten A2, A3, A4 und A5.

10. Gegenüber Isocyanaten reaktive Zusammensetzung gemäß Anspruch 9, wobei

A2. das Polyetherpolyol A2 eine Funktionalität von 3,2 bis 6,2, bevorzugt 3,7 bis 5,7, mehr bevorzugt 4,2 bis 5,2, und eine Hydroxylzahl, bestimmt gemäß DIN 53240-2, Stand November 2007, von 350 - 550, bevorzugt 400 - 500, mehr bevorzugt 420 - 480 mg KOH/g aufweist,
A3. das Polyesterpolyol A3 eine Funktionalität von höchstens 2,5, bevorzugt höchstens 2,3, und eine Hydroxylzahl, bestimmt gemäß DIN 53240-2, Stand November 2007, von 200 - 420, bevorzugt 250 - 370, mehr bevorzugt 280 - 340 mg KOH/g aufweist,
A4. das Polyetherpolyol A4 eine Funktionalität von 3,5 bis 4,5, bevorzugt 3,8 bis 4,2, und eine Hydroxylzahl, bestimmt gemäß DIN 53240-2, Stand November 2007, von 250 - 470, bevorzugt 300 - 420, mehr bevorzugt 320 - 400 mg KOH/g aufweist, und/oder A5. das Polyetherpolyol A5 eine Funktionalität von höchstens 2,5, bevorzugt höchstens 2,3, und eine Hydroxylzahl, bestimmt gemäß DIN 53240-2, Stand November 2007, von 60 - 180, bevorzugt 90 - 140, mehr bevorzugt 100 - 125 mg KOH/g aufweist.

11. Gegenüber Isocyanaten reaktive Zusammensetzung gemäß einem der Ansprüche 9 oder 10, wobei

A2. im Polyetherpolyol A2: das Saccharid Saccharose, Glucose, Sorbit oder eine Mischung aus zwei oder mehr der Vorgenannten umfasst oder daraus besteht und/oder der Polyalkohol Ethlyenglykol, Diethylenglykol, 1,2-Propylenglykol, 1,3-Propylenglykol, 1,4-Butandiol, Neopentylglykol, Glycerin, Trimethylolpropan oder eine Mischung aus zwei oder mehr der Vorgenannten umfasst oder daraus besteht,
A3. im Polyesterpolyol A3: die Carbondisäure oder das Anhydrid einer Carbondisäure des Polyesterpolyols Adipinsäure, Bernsteinsäure, Malonsäure, Phthalsäure, Bernsteinsäureanhydrid, Phthalsäureanhydrid oder eine Mischung aus zwei oder mehr der Vorgenannten umfasst oder daraus besteht und/oder der Dialkohol Ethlyenglykol, Diethylenglykol, 1,2-Propylenglykol, 1,3-Propylenglykol, 1,4-Butandiol, Neopentylglykol, oder eine Mischung aus zwei oder mehr der Vorgenannten umfasst oder daraus besteht,
A4. im Polyetherpolyol A4: das aromatische Diamin ein Toluoldiamin, bevorzugt ortho-Toluoldiamin, ein Phenylendiamin, oder eine Mischung aus zwei oder mehr der Vorgenannten umfasst oder daraus besteht, und/oder
A5. im Polyetherpolyol A5: der wenigstens bifunktionelle Alkohol Ethlyenglykol, Diethylenglykol, 1,2-Propylenglykol, 1,3-Propylenglykol, 1,4-Butandiol, Neopentylglykol, oder eine Mischung aus zwei oder mehr der Vorgenannten umfasst oder daraus besteht.

12. Verfahren zur Herstellung eines Polyurethanschaumstoffs umfassend:

i. Bereitstellen der gegenüber Isocyanaten reaktiven Zusammensetzung gemäß einem der Ansprüche 1 bis 11 und eines Polyisocyanats,
ii. Vermischen und Reagierenlassen der gegenüber Isocyanaten reaktiven Zusammensetzung gemäß einem der Ansprüche 1 bis 11 und des Polyisocyanats, um den Polyurethanschaumstoff zu erhalten.

13. Polyurethanhartschaumstoff, erhältlich oder erhalten aus der Umsetzung der gegenüber Isocyanaten reaktiven Zusammensetzung gemäß einem der Ansprüche 1 bis 11 mit einem Polyisocyanat oder aus dem Verfahren gemäß Anspruch 12.

14. Verwendung des Polyurethanhartschaumstoffs gemäß Anspruch 13 zur thermischen Isolierung, insbesondere in Kühl- oder Gefriergeräten.

15. Kühl- oder Gefriergerät umfassend den Polyurethanhartschaumstoff gemäß Anspruch 13.

EP 4 446 353 A1

Europäisches Patentamt
European Patent Office
Office européen des brevets

# EUROPÄISCHER RECHERCHENBERICHT

Nummer der Anmeldung

EP 23 16 8075

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/260069 A1 (BASF SE [DE]) 30. Dezember 2021 (2021-12-30) | 1,2,4-6, 12-15 | INV. C08G18/18 |
| Y | * Seite 1, Zeilen 1-2 * * Seite 3, Zeile 19 – Seite 4, Zeile 3 * * Seite 5, Zeile 8 – Seite 6, Zeile 3; Ansprüche; Beispiele 26, 27, 30; Tabelle 5 * | 3,7-11 | C08G18/40 C08G18/42 C08G18/48 C08G18/50 C08G18/76 C08J9/14 |
| X | US 2020/283561 A1 (PARKS BRANDON W [US]) 10. September 2020 (2020-09-10) | 1,5,6, 12-15 | |
| Y | * materials 1-4; Absätze [0001], [0009], [0025] – [0039], [0046], [0047]; Beispiel 1; Tabelle 1- * | 2-4,6,7, 9-11 | |
| Y | WO 2020/260235 A1 (BASF SE [DE]) 30. Dezember 2020 (2020-12-30) * Seite 1, Zeilen 5-7 * * Seite 2, Zeilen 20-40 * * Seite 16, Zeilen 21-30 * * Seite 17, Zeilen 5-24; Beispiele; Tabelle 1 * | 1-15 | |
| Y | WO 2016/184433 A1 (HONEYWELL INT INC [US]; HUANG HENG [US]; CHEN RAYMOND [US]) 24. November 2016 (2016-11-24) * Beispiel 2, Formulierungen 2#, 3#, 4#; Absätze [0001], [0003], [0012] – [0016]; Tabellen 6, 10 * | 1-15 | |

RECHERCHIERTE SACHGEBIETE (IPC)

C08G
C08J

Der vorliegende Recherchenbericht wurde für alle Patentansprüche erstellt

| Recherchenort | Abschlußdatum der Recherche | Prüfer |
|---|---|---|
| München | 18. September 2023 | Eigner, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

16

**ANHANG ZUM EUROPÄISCHEN RECHERCHENBERICHT
ÜBER DIE EUROPÄISCHE PATENTANMELDUNG NR.**

EP 23 16 8075

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2023

| Im Recherchenbericht angeführtes Patentdokument | Datum der Veröffentlichung | Mitglied(er) der Patentfamilie | Datum der Veröffentlichung |
|---|---|---|---|
| WO 2021260069 A1 | 30-12-2021 | AU 2021295848 A1 | 02-02-2023 |
| | | BR 112022026388 A2 | 17-01-2023 |
| | | CA 3188780 A1 | 30-12-2021 |
| | | CN 115702184 A | 14-02-2023 |
| | | EP 4172235 A1 | 03-05-2023 |
| | | JP 2023532875 A | 01-08-2023 |
| | | KR 20230029846 A | 03-03-2023 |
| | | US 2023250278 A1 | 10-08-2023 |
| | | WO 2021260069 A1 | 30-12-2021 |
| US 2020283561 A1 | 10-09-2020 | CN 113490701 A | 08-10-2021 |
| | | EP 3935096 A1 | 12-01-2022 |
| | | JP 2022523800 A | 26-04-2022 |
| | | US 2020283561 A1 | 10-09-2020 |
| | | WO 2020185443 A1 | 17-09-2020 |
| WO 2020260235 A1 | 30-12-2020 | CN 114072450 A | 18-02-2022 |
| | | EP 3990512 A1 | 04-05-2022 |
| | | KR 20220031907 A | 14-03-2022 |
| | | US 2022204715 A1 | 30-06-2022 |
| | | WO 2020260235 A1 | 30-12-2020 |
| WO 2016184433 A1 | 24-11-2016 | CN 105440302 A | 30-03-2016 |
| | | WO 2016184433 A1 | 24-11-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022132075 A1
- DE 19604177
- DE 19812174
- DE 3323880
- WO 2004020497 A1
- JP 05163342 B
- EP 1790678 A1
- WO 2004096882 A
- WO 2004096883 A
- EP 1923417 A1
- EP 2177555 A1
- WO 2023057328 A1
- EP 1525244 A